# EUROPEAN PATENT SPECIFICATION

(11) **EP 2 121 867 B1**
(45) Date of publication and mention of the grant of the patent: **28.08.2013**
(21) Application number: 07851128.4
(22) Date of filing: 20.12.2007
(51) Int. Cl.: C09J 183/04

(54) **PEROXIDE-CURABLE SILICONE-BASED PRESSURE-SENSITIVE ADHESIVE COMPOSITION AND ADHESIVE TAPE**
PEROXID-HÄRTBARE, SILICONBASIERTE, DRUCKEMPFINDLICHE KLEBSTOFFZUSAMMENSETZUNG UND KLEBEBAND
COMPOSITION ADHÉSIVE SENSIBLE À LA PRESSION À BASE DE SILICONE DURCISSABLE PAR PEROXYDE ET RUBAN ADHÉSIF

(30) Priority: 25.12.2006 JP 2006347679
(43) Date of publication of application: 25.11.2009
(73) Proprietor: Dow Corning Toray Co., Ltd., Tokyo, 100-0004 (JP)
(72) Inventor: MIZUNO, Haruna, Ichihara-shi Chiba 299-0108 (JP); HORI, Seiji, Ichihara-shi Chiba 299-0108 (JP); YAMADA, Takateru, Ichihara-shi Chiba 299-0108 (JP)
(74) Representative: Gillard, Richard Edward
(86) International application number: PCT/JP2007/075334
(87) International publication number: WO 2008/081951

(56) References cited:
- EP-A- 0 537 784
- US-B1- 6 387 487

## Description

### Technical Field

The present invention relates to a peroxide-curable silicone-based pressure-sensitive adhesive composition with super-low silicone-transfer properties, which, even after being exposed to a high temperature, is capable of maintaining excellent adhesion, prevents almost perfectly generation of adhesive residues and silicone components on the adherend after peeling off. The invention also relates to an adhesive tape that uses the aforementioned silicone-based pressure-sensitive adhesive composition.

### Background Art

As compared to an acrylic-based or a rubber-based pressure-sensitive adhesive composition, silicone-based pressure-sensitive adhesive compositions are superior to the former in their electric-insulating, heat-resistant, weather-proof properties and adhesion to various substrates. Depending on the mechanism of curing, the aforementioned silicone-based pressure-sensitive adhesive compositions can be divided into compositions cured by means of an addition reaction, compositions cured by a condensation reaction, or compositions cured by means of peroxides. In particular, the peroxide-curable silicone-based pressure-sensitive adhesive compositions are advantageous in that it is possible to adjust physical properties of the pressure-sensitive adhesive layer formed by the composition during curing by adjusting the amount of organic peroxides as a catalyst. Such peroxide-curable silicone-based pressure-sensitive adhesive compositions are disclosed in Japan Patent Publication H07-70540 (Patent Reference 1) or Japan Patent Publication H07-53941 (Patent Reference 2) and a peroxide-curable silicone-based pressure-sensitive adhesive composition that consists of an organopolysiloxane having a silanol group, an organopolysiloxane resin that contains a silanol group, an organic peroxide, and an organic solvent is exemplified in these patent. Furthermore, the organopolysiloxane having silanol groups and optionally having alkenyl groups is disclosed in them.

These peroxide-curable silicone-based pressure-sensitive adhesive compositions are known to have some disadvantage such as oxidation and discoloration to the adherends, especially when they are used for manufacturing adhesive tapes for use in the field of electronic and electrical materials that require high heat-resistant properties, in particular, those used for manufacturing heat-resistant tapes, electrical-insulating tapes, heat-seal tapes, plating-masking tapes, masking tapes for heat-treatment operations, etc. For the majority of aforementioned adhesive tapes are intended for use with metal adherends the pasted interface between the tape and the metal is exposed to organic peroxide, which is used as a catalyst, as well as to products of decomposition thereof. Therefore, the surface of the adherend is subject to oxidation, discoloration, or similar effects. For this reason, adhesive tapes that are generally used in the field of electric and electronic materials are mostly addition-curing silicone-based pressure-sensitive adhesive compositions (For example, see Japan Patent Publication H04-335083 (Patent Reference 3) and Japan Patent Publication H10-110156 (Patent Reference 4)).

Although such oxidation and discoloration can be restrained by using substrates exemplified with stainless steel plates or metal-plated substrates, that are resistant to peroxides and products of their decomposition, the aforementioned adhesive tapes have another problem to easily leave adhesive residue and transfer silicone components to the surface of these oxidant-resistant adherend when they are peeled off.

On the other hand, it is proposed in curable silicone-based pressure-sensitive compositions to use the peroxide-type curing mechanism in combination with the addition-reaction-type curing mechanism or the condensation-reacting-type curing mechanism (see Japan Patent Publication H04-335083 (Patent Reference 5), H10-324860 (Patent Reference 6), H05-214316 (Patent Reference 7) and 2004-506778 (Patent Reference 8)). In these system, the curing composition is disclosed to comprise an organopolysiloxane having an alkenyl group, an organohydrogenpolysiloxane or a silanol-containing organopolysiloxane, an organopolysiloxane resin composed of R₃SiO_{1/2} units and SiO_{4/2} units, a hydrosilylation catalyst or a silanol-reaction catalyst, organic peroxide, and organic solvent.

However, when these known adhesive tapes having the silicone-based pressure-sensitive adhesive layer is used for its heat-resistant properties and after the tape is peeled off, a residual microscopic amount of silicone can still be visually observed on the substrate surface, and an additional operation of cleaning the surface with an organic solvent becomes indispensable. Therefore, there was a demand for developing a pressure-sensitive adhesive that would leave a practically invisible amount of residual silicone component on the surface of a substrate so that it would be possible to eliminate the need for cleaning the substrate surface with an organic solvent, in particular when the aforementioned tape is used as a masking tape during a heat-treatment operation in solder reflow treatment of circuit boards.

With use of the silicone-based pressure-sensitive adhesive compositions disclosed in the aforementioned patent literature, it was impossible to limit development of the residual adhesive on the surface of the adherend after holding in a high-temperature environment at temperatures equal to or exceeding 250°C and to get rid of the subsequent cleaning of the surface of the adherend with an organic solvent to an extent such that it would be possible to prevent discoloration of the surface of the adherend and to completely eliminate existence of the residual silicone on the adherend's surface.

### Disclosure of Invention

It is an object of the invention to provide a peroxide-curable silicone-based pressure-sensitive adhesive composition giving a pressure-sensitive adhesive layer with super-low silicone-transfer property that no adhesive residue can be detected by human eyes and does not transfer a silicone component even if it is exposed to heat treatment at a temperature equal to or greater than 250°C. It is another object to provide an adhesive tape based on the aforementioned adhesive composition, in particular a masking tape for use in heat treatment processes.

These problems of the prior arts can be solved by means of a peroxide-curable silicone-based pressure-sensitive adhesive composition comprising of components (A) through (C) given in below, and by means of an adhesive tape having a pressure-sensitive adhesive layer obtained by curing the aforementioned peroxide-curable silicone-based pressure-sensitive adhesive composition:
(A) a diorganopolysiloxane having silicon-bonded alkenyl groups at both molecular terminals used in amount of 100 parts by weight, which is represented by general formula (1): 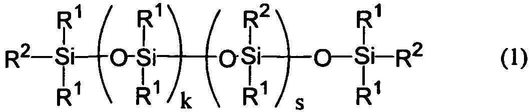 (where R¹ designates a non-substituted or substituted monovalent saturated hydrocarbon group, R² designates an alkenyl group having 2 to 10 carbon atoms, "k" is an integer equal to or greater than 2000, and "s" is 0 or a positive integer that satisfies the following condition: 0.0 ≤ s/(k +s) ≤ 0.02)
(B) an organopolysiloxane resin having one or more silanol(OH) groups in one molecule and consisting of R³₂(OH)SiO_{1/2} units (where R³ independently stands for non-substituted or substituted monovalent hydrocarbon groups having 1 to 10 carbon atoms), R³₃SiO_{1/2} units (wherein R³ is the same as defined above), and SiO_{4/2} units, used in amount of 10 to 200 parts by weight; and
(C) one or more types of peroxide-based compounds used in a catalytic quantity.

More specifically, the invention provides:
[1] A peroxide-curable silicone-based pressure-sensitive adhesive composition comprising components (A) through (C), wherein:
   (A) a diorganopolysiloxane having silicon-bonded alkenyl groups at both molecular terminals used in amount of 100 parts by weight, which is represented by general formula (1): 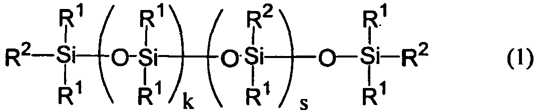 (where R¹ designates a non-substituted or substituted monovalent saturated hydrocarbon group, R² designates an alkenyl group having 2 to 10 carbon atoms, "k" is an integer equal to or greater than 2000, and "s" is 0 or a positive integer that satisfies the following condition: 0.0 ≤ s/(k +s) ≤ 0.02)
   (B) an organopolysiloxane resin having one or more silanol(OH) groups in one molecule and consisting of R³₂(OH)SiO_{1/2} units (where R³ independently stands for non-substituted or substituted monovalent hydrocarbon groups having 1 to 10 carbon atoms), R³₃SiO_{1/2} units (wherein R³ is the same as defined above), and SiO_{4/2} units, used in amount of 10 to 200 parts by weight; and
   (C) one or more types of organic peroxide compounds used in a catalytic quantity.
[2] The peroxide-curable silicone-based pressure-sensitive adhesive composition of Item [1], wherein aforementioned component (B) is an organosiloxane resin having a ratio of the sum of R³₂(OH)SiO_{1/2} units and R³₃SiO_{1/2} units to SiO_{4/2} units in the range of 0.5 to 1.2.
[3] The peroxide-curable silicone-based pressure-sensitive adhesive composition of Item [1], wherein aforementioned component (B) is an organopolysiloxane resin in which among all functional groups contained in this component, 90 to 99.5 mole % are methyl groups and 0.5 to 10 mole % are silanol groups.
[4] The peroxide-curable silicone-based pressure-sensitive adhesive composition according to any Item from [1] to [3], further comprising an organic solvent (D).
[5] An adhesive tape comprising a support film and a pressure-sensitive adhesive layer obtained by curing the peroxide-curable silicone-based pressure-sensitive adhesive composition according to any Item from [1] to [4].
[6] The adhesive tape of Item [5], which is a masking tape for use in thermal treatment.
[7] The adhesive tape of Item [5], wherein the aforementioned masking tape is intended for use in treatment at temperatures in the range of 200 to 300°C.

### Effect of Invention

This invention can provide a peroxide-curable silicone-based pressure-sensitive adhesive composition giving a pressure-sensitive adhesive layer with super-low silicone-transfer property that no adhesive residue can be detected by human eyes and does not transfer a silicone component even when it is repeeled after being exposed to heat treatment at a temperature equal to or greater than 250°C. And, this invention can provide an adhesive tape based on this composition, in particular a masking tape for use in heat treatment processes.

### Detailed Description of the Invention

At first, the peroxide-curable silicone-based pressure-sensitive adhesive composition of the present invention is explained in detail. This composition comprises (A) a highly polymerized diorganopolysiloxane having silicon-bonded alkenyl groups at both molecular terminals and the content of these groups in a determined range, (B) an organopolysiloxane resin having silanol groups, and (C) organic peroxide compounds. By using these components in a determined amount, almost complete prevention of transfer of silicone components and adhesive residue on the adherend is achieved after peeling off.

Component (A) is one of the specific components of the invention. This component is a diorganopolysiloxane that has silicon-bonded alkenyl groups on both molecular terminals and that is represented by general formula (1), given below: 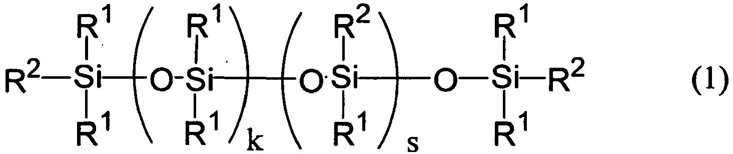 (where R¹ designates a non-substituted or substituted monovalent saturated hydrocarbon group , R² designates an alkenyl group having 2 to 10 carbon atoms, "k" is an integer equal to or greater than 2000, and "s" is 0 or a positive integer that satisfies the following condition: 0.0 ≤ s/(k +s) ≤ 0.02).
By using the diorganopolysiloxane of present component (A), which has silicon-bonded alkenyl groups on both terminals and has a predetermined degree of polymerization and amount of alkenyl groups, in combination with component (B), described below, it becomes possible to almost completely prevent transfer of silicone components to the surface of the adherend and formation of adhesive residual on the adherend after repeeling off.

In the above formula, R¹ designates a non-substituted or substituted saturated monovalent hydrocarbon group. Specific examples of these groups are the following: methyl, ethyl, propyl, isopropyl, butyl, isobutyl, tert-butyl, pentyl, neopentyl, hexyl, heptyl, octyl, nonyl, decyl, dodecyl, or similar alkyl groups; phenyl, tolyl, xylyl, naphthyl, biphenyl, or similar aryl groups; cyclopentyl, cyclohexyl, cycloheptyl, or similar cycloalkyl groups; benzyl, phenylethyl, phenylpropyl, methylbenzyl, or similar aralkyl groups; or the aforementioned groups wherein one or more hydrogen atoms of the saturated monovalent hydrocarbon groups is substituted with a halogen atom such as a fluorine atom, chlorine atom, bromine atom, or another halogen atom, as well as a cyano group. Examples of such [substituted] groups are the following: chloromethyl, 2-bromoethyl, 3-chloropropyl, 3,3,3-trifluoropropyl, chlorophenyl, fluorophenyl, cyanoethyl, 3,3,4,4,5,5,6,6,6-nonafluorohexyl group, etc. Most preferable from the production point of view are methyl and phenyl groups. R² represents an alkenyl group with 2 to 10 carbon atoms. Such groups may be exemplified by vinyl, allyl, propenyl, isopropenyl, butenyl, pentenyl, hexenyl, cyclohexenyl, or similar groups. Most preferable are alkenyl groups with two to six carbon atoms, in particular, vinyl and hexenyl groups.

In the above formula, "k" is an integer equal to or greater than 2000 and designates the degree of polymerization. It is preferable that "k" be in the range of 2000 to 100,000. If the degree of polymerization "k" of component (A) is lower than 2000, it will not be possible to obtain a pressure-sensitive adhesive layer with sufficiently low adhesive-transfer properties. Furthermore, the degree of polymerization "s" of silicone unit components having alkenyl groups is equal to 0 or is a positive integer and both degrees of polymerization "k" and "s" should satisfy the following condition: 0 ≤ s/ (k + s) ≤ 0.02. If s/ (k + s) exceeds the recommended upper limit, it will be impossible either to form a stable pressure-sensitive adhesive layer even if the below-described component (C), which constitutes the curing catalyst, is adjusted to the appropriate amount or to provide sufficient adhesion of the pressure-sensitive adhesive layer to the substrate. If component (A) does not contain alkenyl groups with 2 to 10 carbon atoms on both molecular terminals, it will be practically impossible to provide the pressure-sensitive adhesive layer with sufficiently low adhesive-transfer properties. Most preferably, component (A) has only two alkenyl groups with 2 to 10 carbon atoms on both molecular terminals.

It is preferable that component (A) has viscosity at 25°C equal to or greater than 50,000 mPa·s and more preferably greater than 100,000 mPa·s and comprise a liquid organopolysiloxane or an organopolysiloxane having plasticity, which is known as a so-called crude silicone rubber.

Component (B) is an organopolysiloxane resin that consists of R³₂(OH)SiO_{1/2} units, R³₃SiO_{1/2} units, and SiO_{4/2} units. This component contains one or more silanol(OH) groups in one molecule. From the viewpoint of low adhesive-transfer properties of the pressure-sensitive adhesive layer obtained by curing the composition of the invention, it is preferable that among all functional groups included in component (B), silanol groups constitute 0.5 to 10 mole %, preferably 1 to 5 mole %, of all functional groups, i.e., sum of silanol(OH) groups and the functional groups designed by R³.
R³ designates a non-substituted or substituted monovalent hydrocarbon group having 1 to 10 carbon atoms independently. Specific examples of this group are the following: methyl, ethyl, propyl, isopropyl, butyl, isobutyl, tert-butyl, pentyl, neopentyl, hexyl, heptyl, octyl, nonyl, decyl, dodecyl, or a similar alkyl group; phenyl, tolyl, xylyl, naphthyl, biphenyl, or a similar aryl group; cyclopentyl, cyclohexyl, cycloheptyl, or a similar cycloalkyl group; benzyl, phenylethyl, phenylpropyl, methylbenzyl, or a similar aralkyl group; vinyl, allyl, propenyl, isopropenyl, butenyl, pentenyl, hexenyl, cyclohexenyl, or a similar alkenyl group; or the aforementioned groups wherein one or more hydrogen atoms of the monovalent hydrocarbon groups is substituted with a halogen atom such as a fluorine atom, chlorine atom, bromine atom, or another halogen atom, as well as a cyano group. Examples of such [substituted] groups are the following: chloromethyl, 2-bromoethyl, 3-chloropropyl, 3,3,3-trifluoropropyl, chlorophenyl, fluorophenyl, cyanoethyl, 3,3,4,4,5,5,6,6,6-nonafluorohexyl group, etc. Methyl groups are most preferable from the production point of view. It is preferable that the content of methyl groups range from 90 to 99.5 mole %, preferably from 90 to 99 mole % of the sum of all aforementioned functional groups represented by silanol (OH) group and the functional groups designed by R³ in component (B),.

The mole ratio of the sum of R³₂(OH)SiO_{1/2} and R³SiO_{1/2} units to SiO_{4/2} units in the component (B) should be in the range of 0.5 to 1.2, preferably in the range of 0.6 to 0.9. If the mole ratio of the sum of R³₂(OH)SiO_{1/2} and R³₃SiO_{1/2} units to SiO_{4/2} units is below the recommended lower limit, the tackiness of the pressure-sensitive adhesive agent would be reduced. if the aforementioned mole ratio exceeds the recommended upper limit, there would be a tendency to reduce the cohesion force (holding strength).

It is necessary that in the peroxide-curable pressure-sensitive silicone-based adhesive composition, component (B) be used in the amount of 10 to 200 parts by weight, preferably in the range of 25 to 100 parts by weight per 100 parts by weight of component (A). If component (B) is used in the amount less than the above lower limit, it will be impossible to provide sufficient adhesion of the pressure-sensitive adhesive layer obtained by curing the silicone-based pressure-sensitive adhesive composition; and if the content of this component exceeds the above upper limit, then after heat treatment, a part of component (B) will remain on the surface of the adherend and, therefore, the objects of the invention will not be achieved.

Component (C) is at least one type of organic peroxide compounds, which is used as a catalyst for curing a peroxide-curable pressure-sensitive silicone-based adhesive composition. More specifically, such catalyst may comprise a curing catalyst for crosslinkable silicone composed of an organopolysiloxane having in one molecule at least two alkenyl groups or a curing catalyst for component (B) which comprises an organopolysiloxane that contains silanol groups. There are no special restrictions with respect to component (C) provided that it is used on the curing system with the use of organic peroxide compounds. Examples of such a curing catalyst are the following: benzoyl peroxide, 4-monochlorobenzoyl peroxide, dicumyl peroxide, tert-butylperoxybenzoate, tert-butylcumyl peroxide, tert-butyloxide, 2,5-dimethyl-2,5-di-tert-butylperoxyhexane, 2,4-dichlorobenzoyl peroxide, di-t-butylperoxy-diisopropylbenzene, 1,1-bis (t-butylperoxy)-3,3,5-trimethylcyclohexane, 2,5-di-tert-butylperoxyhexane-3,2,5-dimethyl-2,5-bis (tert-butylperoxy) hexane, or cumyl-tert-butylperoxide. These catalysts can be used individually or in combinations of two or more. Most preferable is benzoyl peroxide.

There are no special restrictions with regard to the amount in which component (C) can be used in the peroxide-curable pressure-sensitive silicone-based adhesive composition, provided that component (C) is used in a catalytic quantity that can accelerate curing reaction between components (A) and (B) under condition of heating in the range of 50 to 200°C. However, from a practical point of view, it is preferable to use in the amount of 0.2 to 3.0 parts by weight, and more preferably 0.5 to 2.0 parts by weight per 100 parts by weight of the sum of components (A) and (B). If component (C) is used in an amount less than the recommended lower limit, curing will be insufficient. If, on the other hand, the amount of component (C) exceeds the recommended upper limit, the organic peroxide compounds or products of the composition thereof will remain on the surface of the adherend after heat treatment. Such organic peroxide compunds may cause oxidation, discoloration, or development of adhesive residue on the surface of the adherend, or may facilitate transfer of the silicone component to the surface of the adherend. Therefore, the objects of the invention will not be achieved.

As far as purposes of the invention cannot be disturbed, the peroxide-curable silicone-based pressure-sensitive adhesive composition may further comprise some optional components in addition to components (A) through (C). One such component is as exemplified by an organic solvent (D) or other conventionally used additives of various types.

The peroxide-curable silicone-based pressure-sensitive adhesive composition can be mixed with or dispersed in an organic solvent (D). Such organic solvent can be represented by toluene, xylene, or a similar aromatic-type hydrocarbon solvent; hexane, octane, iso-paraffin, or a similar aliphatic-type hydrocarbon solvent; acetone, methylethylketone, methylisobutylketone, or a similar ketone-based solvent; ethyl acetate, isobutyl acetate, or a similar ester-based acetate; diisopropyl ether, 1,4-dioxane, or a similar ether-based solvent; hexamethylcyclotrisiloxane, octamethylcyclotetrasiloxane, decamethylcyclopentasiloxane, or similar cyclic polysiloxanes having a degree of polymerization ranging from 3 to 6, as well as trichloroethylene, per-chloroethylene, trifluoromethylbenzene, 1,3-bis(trifluoromethyl) benzene, methylpentafluorobenzene, or a similar halogenated hydrocarbon. Preferable are toluene, xylene, or a similar aromatic-type hydrocarbon solvent; hexane, octane, iso-paraffin, or a similar aliphatic-type hydrocarbon solvent. Most preferable is toluene or xylene. These solvents can be used in a mixture of two or more. There are no special restrictions with regards to amounts in which the aforementioned organic solvents of component (D) can be used, but, in general, it can be recommended to use them in an amount of 5 to 1,000 parts by weight per 100 parts by weight of the total amount of components (A) through (C).

The peroxide-curable silicone-based pressure-sensitive adhesive composition of the invention is prepared by mixing aforementioned components (A) through (C), if necessary, with one or more aforementioned arbitrary components. These components can be uniformly mixed by using known various stirrers or mixers. Mixing is carried out at a temperature ranging from 0 to 20°C. Preparation of the composition may consist of merely mixing the components without special restriction to the sequence in which the components are added. However, if the composition is not intended for immediate use directly after preparation, a mixture can be prepared only from components (A), (B), and organic solvent (D) and can be stored separately from components (C) for mixing with the latter only prior to use.

The peroxide-curable pressure-sensitive adhesive layer by curing the silicone-based pressure-sensitive adhesive composition of the invention can be prepared by being applied onto a substrate and cured at room temperature or under a temperature of 150 to 220°C by heating. The composition can be applied by gravure coater, offset coater, offset-gravure coater, roller coater, reverse-roller coater, air-knife coater, curtain coater, or a comma coater.

The following is a more detailed description of the adhesive tape of the invention. The adhesive tape of the invention is characterized with having a pressure-sensitive adhesive layer formed by curing the above-mentioned peroxide-curable silicone-based pressure-sensitive adhesive composition of the invention on a support film substrate.

It is preferable that the support film substrate possesses high heat-resistant properties and can withstand heat treatment at a temperature equal to or greater than 200°C. Examples of materials suitable for such films are the following: polyimide (PI), polyetheretherketone (PEEK), polyethylene naphthalate (PEN), liquid-crystal polyarylate, polyamideimide (PAI), polyether sulfide (PES), or similar resin films, as well as aluminum foil, copper foil, or a similar metal foil. There is no special restriction with regard to the thickness of the film, but normally the thickness is in the range of 5 to 300 µm. Furthermore, in order to improve tight bonding of the pressure-sensitive layer to the film substrate, the film substrate may be coated with a primer, or subjected to corona-discharge treatment, etching, itro-treatment or plasma treatment.

The adhesive tape is prepared by applying the peroxide-curable silicone-based pressure-sensitive adhesive composition of the invention onto the aforementioned film substrate, then, if necessary, subjecting the coating to preliminary drying at a temperature of 70 to 120°C and curing the layer at room temperature or by heating it at a temperature in the range of 150 to 220°C after the drying process, and thus to form a pressure-sensitive adhesive layer on the film substrate. Application methods can be the same as mentioned above. Curing of the silicone-based pressure-sensitive adhesive composition by heating is preferable, and it is preferable to heat the composition at a temperature within a range of 160 to 200°C. The amount of the composition to be applied depends on a specific application, but typically after curing the thickness of the pressure-sensitive adhesive layer should be in the range of 2 to 200 µm, and for masking tape applications the thickness should range from 5 to 50 µm.

The adhesive tape of the present invention possesses excellent heat-resistant properties, prevents formation of an adhesive substance comprising the peroxide-curable silicone-based pressure-sensitive adhesive composition when the tape is peeled off, and almost completely eliminates transfer of the silicone component to the adherend. Therefore the adhesive tape of the invention is suitable for use as a heat-resistant tape, electrical insulation tape, heat-seal tape, masking tape for plating processes, masking tape for heat treatment, or to other similar applications. In particular, the adhesive tape of the invention is especially suitable for use as a heat-treatment masking tape or a temporary-fixing tape employed in solder-reflow processes at a temperature within a range of 200 to 300°C, preferably from 250 to 300°C.

### Examples

The invention will be further described in more detail with reference to practical and comparative examples, though it should be understood that these examples should not be construed as limiting the scope of possible applications of the invention. In the examples, methods for evaluating [adhesive residue and transfer of silicone components left on the substrate after exposure to high temperatures], and its [adhesive force] are described below. In the practical and comparative examples, Me designates methyl groups, and Vi designates vinyl groups. All percents (%) are wt.%.

### [Adhesive Force]

The silicone-based pressure-sensitive adhesive composition is applied to a substrate made of a polyimide resin (PI) in such an amount that, after curing, the pressure-sensitive adhesive layer that is formed has a thickness of about 15 µm. The adhesive sheet is formed by heating the resulting article for 2 minutes at 180°C. Following this, the obtained adhesive sheet was placed onto a peel-off film by means of a laminator, and the laminated structure was aged in an oven for one day at 50°C. After cooling to room temperature, adhesive tapes on peel-off substrates were prepared by cutting the aged sheet into 20 mm-wide strips. The adhesive tapes were then peeled off from the peel-off substrates, and pasted to an adherend of a mirror-surface stainless-steel sheet (SUS304) by applying a 2 kg force from a rubber roller. Following this, the tape was retained on the adherend for 30 min., and then the adhesive force is measured with a tensile tester at a constant peeling rate of 300 mm/minute and .a peeling angle of 180°.

### [Adhesive Residue and Transfer of Silicone Components Left on the Substrate after Exposure to High Temperature]

The silicone-based pressure-sensitive adhesive composition is applied to a substrate made of a polyimide resin (PI) in such an amount that, after curing, the pressure-sensitive adhesive layer that is formed has a thickness of about 15 µm. The adhesive sheet is formed by heating the resulting article for 2 minutes at 180°C. Following this, the obtained adhesive sheet was placed onto a peel-off film by means of a laminator, and the laminated structure was aged in an oven for one day at 50°C. After cooling to room temperature, adhesive tapes on peel-off substrates were prepared by cutting the aged sheet into 20 mm-wide strips. The adhesive tapes were then peeled off from the peel-off substrates, and pasted to an adherend of a mirror-surface stainless-steel sheet (SUS304) or of gold-plated copper-coated glass epoxy resin plate by applying a 2 kg force from a rubber roller. Following this, the laminated structure of the adhered was aged in an oven for 10 min at 250°C, and then retained on the adherend for 30 min at room temperature. The adhesive residue and transfer of silicone components left on the substrate is evaluated by peeling the pasted adhesive tape off with a tensile tester at a constant peeling rate of 300 mm/minute and peeling angle of 180°. The evaluation was carried out by human eyes in accordance with the following criteria:
○ : Any adhesive residue was not remained, and no traces of the adhesive silicone layer on its surface of the adherend
Δ : Any adhesive residue was not remained, and only slight traces of the adhesive silicone layer on its surface of the adherend
X : Adhesive residue was observed on its surface of the adherend

### Practical Example 1

A peroxide-curable silicone-based pressure-sensitive adhesive composition P1 with a 33 wt.% organopolysiloxane component was prepared by mixing the following components:
(A) 28.0 parts by weight of a diorganopolysiloxane having vinyl groups only on both molecular terminals (average molecular weight = 296,800; vinyl % = 0.06), which is shown by the average structural formula given below:
   ViMe₂SiO (Me₂SiO)₄₀₀₀ SiMe₂Vi
(B) 16.4 parts by weight of a toluene solution with 73.1 parts by weight of a solid substance of an organopolysiloxane resin (average molecular weight = 4605; and OH-group content = 1.11 wt.%) consisting of Me₃SiO_{1/2} units, HOMe₂SiO_{1/2} units, and SiO_{4/2} units, which is shown by the below average structural formula:
   {Me₃SiO_{1/2}}₂₇ {HOMe₂SiO_{i/2}}₃ {SiO_{4/2}}₃₆
(C) 2.0 parts by weight of benzoyl peroxide (product of Nippon Oil and Fats Co., Ltd.; Nyper BMT-K40);
2.0 parts by weight of xylene; and
73.5 parts by weight of toluene.
The obtained silicone-based pressure-sensitive adhesive agent P1 was used for preparing an adhesive tape. The adhesive force and silicone-transfer properties of this adhesive tape were evaluated by the same method as described above.

### Practical Example 2

A peroxide-curable silicone-based pressure-sensitive adhesive agent P2 was prepared by the same method as in Practical Example 1 with the exception that component (A) was replaced with 28.0 parts by weight of a diorganopolysiloxane having vinyl groups on its molecular terminals and in side molecular chains (average molecular weight = 298,500; vinyl % = 0.20), which is shown by the average structural formula given below:
ViMe₂ SiO(Me₂SiO)₄₀₀₀ (ViMesiO)₂₀ SiMe₂Vi
The obtained silicone-based pressure-sensitive adhesive agent P2 was used for preparing an adhesive tape. The adhesive force and silicone-transfer properties of this adhesive tape were evaluated by the same method as described above.

### Practical Example 3

A peroxide-curable silicone-based pressure-sensitive adhesive composition P3 with 33 wt.% content of the organopolysiloxane component was obtained by the same method as in Practical Example 1 with the exception that component (A) was replaced with 28.0 parts by weight of a diorganopolysiloxane having vinyl groups on its molecular terminals and in side molecular chains (average molecular weight = 300,223; vinyl % = 0.38), which is shown by the average structural formula given below:
ViMe₂ SiO(Me₂SiO)₄₀₀₀ (ViMeSiO)₄₀ SiMe₂Vi
The obtained silicone-based pressure-sensitive adhesive agent P3 was used for preparing an adhesive tape. The adhesive force and silicone-transfer properties of this adhesive tape were evaluated by the same method as described above.

### Comparative Example 1

A peroxide-curable silicone-based pressure-sensitive adhesive composition C1 with 33 wt.% content of the organopolysiloxane component was obtained by the same method as in Practical Example 1 with the exception that component (A) was replaced with 28.0 parts by weight of a diorganopolysiloxane having silanol groups on its both molecular terminals (average molecular weight = 296,784; silanol % = 0.01), which is shown by the average structural formula given below:

(HO)Me₂ SiO(Me₂SiO)₄₀₀₀ SiMe₂(OH)

The obtained silicone-based pressure-sensitive adhesive agent C 1 was used for preparing an adhesive tape. The adhesive force and silicone-transfer properties of this adhesive tape were evaluated by the same method as described above.

### Comparative Example 2

A peroxide-curable silicone-based pressure-sensitive adhesive composition C2 with 33 wt.% content of the organopolysiloxane component was obtained by the same method as in Practical Example 1 with the exception that component (B) was replaced with 16.4 parts by weight of a toluene solution with 73.1 parts by weight of a solid substance of an organopolysiloxane resin (average molecular weight = 4599) consisting of Me₃SiO_{1/2} units and SiO_{4/2} units, which is shown by the below average structural formula:

{Me₃SiO_{1/2} }₃₀ {SiO_{4/2}}₃₆

The obtained silicone-based pressure-sensitive adhesive agent C2 was used for preparing an adhesive tape. The adhesive force and silicone-transfer properties of this adhesive tape were evaluated by the same method as described above.

### Comparative Example 3

A peroxide-curable silicone-based pressure-sensitive adhesive composition C3 with a 33 wt.% organopolysiloxane component was prepared by mixing the following components:
(a) 1.2 parts by weight of methylhydrogen/dimethylpolysiloxane having both molecular terminals capped with trimethylsiloxy groups, having viscosity of 55 mPa·s (H atom % = 1.0), which is shown by the average structural formula given below:

   Me₃SiO (Me₂SiO)₂₄ (MeHSiO)₅₀ SiMe₃
(b) 31.8 parts by weight of a diorganopolysiloxane having vinyl groups on its molecular terminals and in side molecular chains (average molecular weight = 300,000; vinyl % = 0.06), which is shown by the average structural formula given below:

   ViMe₂ SiO(Me₂SiO)₄₀₀₀ (ViMeSiO)₅ SiMe₂Vi
(c) 20.0 parts by weight of a toluene solution with 68.1 parts by weight of a solid substance of an organopolysiloxane resin consisting of Me₃SiO_{1/2} units and SiO_{4/2} units (a mole ratio of Me₃SiO_{1/2} units to SiO_{4/2} was equal to 0.8/1), which is shown by the below average structural formula:

   {Me₃SiO_{1/2} }₃₀ {SiO_{4/2}}₃₆
(d) a chloroplatinic-acid complex of 1,3-divinyl-1,1,3,3-tetramethyldisiloxane used in an amount such that in terms of weight units the content of a metallic platinum in the complex is 100 ppm per total weight of components (a) through (c);
   1.65 parts by weight of xylene; and
   91.7 parts by weight of toluene.
The obtained silicone-based pressure-sensitive adhesive agent C3 was used for preparing an adhesive tape. The adhesive force and silicone-transfer properties of this adhesive tape were evaluated by the same method as described above.

Results of the evaluation obtained in Practical Example 1 through 3and in Comparative Examples 1 through 3 are shown in Table 1. Even when the silicone-based pressure-sensitive adhesive composition comprising components (A) through (C) of the invention, especially in Practical Example 1 through 2, was used for heat-resistant applications, the composition provided sufficient adhesive force, did not change its appearance, could be peeled off without leaving an adhesive residue, and almost completely prevented its transfer of silicone component to the surface of the adherend. On the other hand, in the case of Comparative Example 1, which uses another diorganopolysiloxane different from the component (A) of the present invention, and in the case of Comparative Example 2, which uses another organopolysiloxane resin different from component (B) of the present invention, it is impossible to provide sufficient prevention from the transfer of silicone components to the surface of the adherend. Furthermore, as compared to the composition of the present invention, the composition of Comparative Example 3, which is the silicone-based pressure-sensitive adhesive composition curable by an known addition-reaction, also did not provide sufficient prevention from transfer of silicone components.

**[Table 1]**

| | | Practical Examples | | | Comparative Examples | | |
|---|---|---|---|---|---|---|---|
| | | 1 | 2 | 3 | 1 | 2 | 3 |
| Adhesive force [g/20 mm] | | 50 | 36 | 30 | 32 | 42 | 10 |
| Property of non-leaving of Adhesive Residue | Mirror-surface SUS Plate | ○ | ○ | Δ | ○ | X | X |
| | Gold-plated plate | ○ | ○ | ○ | ○ | X | ○ |
| Property of non-transfer of silicone component | Mirror-surface SUS Plate | ○ | ○ | Δ | ○ | X | Δ~X |
| | Gold-plated plate | ○ | ○ | Δ | Δ~X | x | Δ |

## Claims

1. A masking tape for use in thermal treatment comprising a support film and a pressure-sensitive adhesive layer obtainable by curing a peroxide-curable silicone-based pressure-sensitive adhesive composition comprising components (A) through (C), wherein:
(A) a diorganopolysiloxane having silicon-bonded alkenyl groups at both molecular terminals used in amount of 100 parts by weight, which is represented by general formula (1): 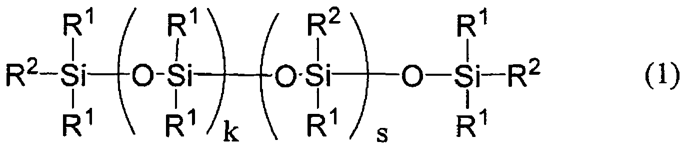 where R' designates a non-substituted or substituted monovalent saturated hydrocarbon group, R² designates an alkenyl group having 2 to 10 carbon atoms, "k" is an integer greater than 2,000, and "s" is 0 or a positive integer that satisfies the following condition: 0.0 < s/(k +s) < 0.02
(B) an organopolysiloxane resin having one or more silanol(OH) groups in one molecule and consisting of R³₂(OH)SiO_{1/2} units where R³ independently stands for non- substituted or substituted monovalent hydrocarbon groups having 1 to 10 carbon atoms, R³₃SiO_{1/2} units wherein R³ is the same as defined above, and SiO_{4/2} units, used in amount of 10 to 200 parts by weight and the resin having a ratio of the sum of R³₂(OH)SiO_{1/2} units and R³₃SiO_{1/2} units to SiO_{4/2} units in the range of 0.6 to 0.9; and
(C) one or more types of organic peroxide compounds used in a catalytic quantity.

2. The masking tape for use in thermal treatment comprising a support film and a pressure-sensitive adhesive layer obtainable by curing a peroxide-curable silicone-based pressure-sensitive adhesive composition according to Claim 1, wherein aforementioned component (B) is an organosiloxane resin in which among all functional groups contained in this component, 90 to 99.5 mole % are methyl groups and 0.5 to 10 mole % are silanol groups.

3. The masking tape for use in thermal treatment according to Claims 1 through 2, the peroxide-curable silicone-based pressure-sensitive adhesive composition further comprising an organic solvent (D).

4. The masking tape for use in thermal treatment according to Claim 1 through 2, which is a masking tape for use in thermal treatment at temperatures in the range of 200 to 300°C.

## Patentansprüche

1. Maskierungsband zur Verwendung in einer Wärmebehandlung, eine Trägerfolie und eine druckempfindliche Klebstoffschicht umfassend, die durch Härten einer mit Peroxid härtbaren, druckempfindlichen Klebstoff-Zusammensetzung auf Silikonbasis erhalten werden kann, die Komponenten (A) bis (C) umfasst, wobei:
(A) ein Diorganopolysiloxan mit siliciumgebundenen Alkenylgruppen an beiden molekularen Endgruppen, das in einer Menge von 100 Gewichtsteilen verwendet wird, das dargestellt wird durch die allgemeine Formel (1): 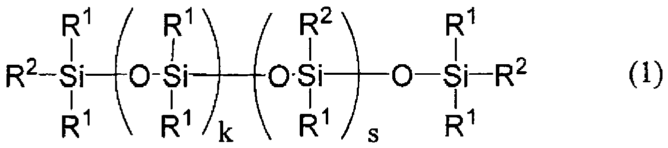 wobei R¹ für eine nicht-substituierte oder substituierte, einwertige, gesättigte Kohlenwasserstoffgruppe steht, R² für eine Alkenylgruppe mit 2 bis 10 Kohlenstoffatomen steht, "k" für eine ganze Zahl größer 2.000 steht und "s" für 0 oder eine positive ganze Zahl steht, welche die folgende Bedingung erfüllt: 0,0 < s/(k +s) < 0,02,
(B) ein Organopolysiloxanharz, das ein oder mehrere Silanol(OH)-Gruppen in einem Molekül aufweist und aus Folgendem besteht:
R³₂(OH)SiO_{1/2}-Einheiten, wobei R³ unabhängig für nicht-substituierte oder substituierte, einwertige Kohlenwasserstoffgruppen mit 1 bis 10 Kohlenstoffatomen steht, R³₃SiO_{1/2}-Einheiten, wobei R³ gleich ist wie oben beschrieben, und SiO_{4/2}-Einheiten, und das in einer Menge von 10 bis 200 Gewichtsteilen verwendet wird und wobei das Harz ein Verhältnis der Summe von R³₂(OH)SiO_{1/2}-Einheiten und R³₃SiO_{1/2}-Einheiten zu SiO_{4/2}-Einheiten im Bereich von 0,6 bis 0,9 aufweist, und
(C) eine oder mehrere Arten von organischen Peroxidverbindungen, die in einer katalytischen Menge verwendet werden.

2. Maskierungsband nach Anspruch 1 zur Verwendung in einer Wärmebehandlung, eine Trägerfolie und eine druckempfindliche Klebstoffschicht umfassend, die durch Härten einer mit Peroxid härtbaren, druckempfindlichen Klebstoff-Zusammensetzung auf Silikonbasis erhalten werden kann, wobei die oben genannte Komponente (B) ein Organosiloxanharz ist, in dem von sämtlichen funktionellen Gruppen, die in dieser Komponente enthalten sind, 90 bis 99,5 Mol% Methylgruppen sind und 0,5 bis 10 Mol% Silanolgruppen sind.

3. Maskierungsband nach Anspruch 1 bis 2 zur Verwendung in einer Wärmebehandlung, wobei die mit Peroxid härtbare, druckempfindliche Klebstoff-Zusammensetzung auf Silikonbasis ferner ein organisches Lösungsmittel (D) umfasst.

4. Maskierungsband nach Anspruch 1 bis 2 zur Verwendung in einer Wärmebehandlung, bei dem es sich um ein Maskierungsband zur Verwendung in der Wärmebehandlung bei Temperaturen im Bereich von 200 bis 300 °C handelt.

## Revendications

1. Ruban-cache destiné à être utilisé lors de traitement thermique comprenant un film support et une couche d'adhésif sensible à la pression obtensible par durcissement d'une composition d'adhésif sensible à la pression à base de silicone durcissable sous l'action de peroxyde, ladite composition comprenant des composants (A) à (C), dans lesquels :
(A) est un diorganopolysiloxane ayant des groupes alcényle liés à du silicium aux deux terminaisons moléculaires utilisé en une quantité de 100 parties en poids, représenté par la formule générale (1) : 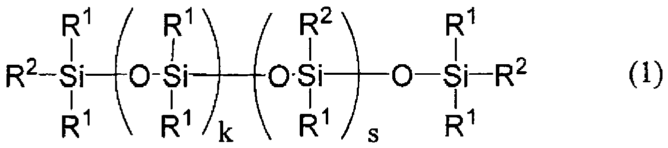 dans laquelle R¹ désigne un groupe hydrocarbure saturé monovalent substitué ou non substitué, R² désigne un groupe alcényle ayant de 2 à 10 atomes de carbone, « k » est un entier supérieur à 2000 et « s » est 0 ou un entier positif qui répond à la condition suivante : 0,0 < s/(k +s) < 0,02
(B) est une résine organopolysiloxane ayant un ou plusieurs groupes silanol(OH) dans une molécule et constituée de motifs R³₂(OH)SiO_{1/2} où R³ représente indépendamment des groupes hydrocarbures monovalents substitués ou non substitués ayant de 1 à 10 atomes de carbone, des motifs R³₃SiO_{1/2} où R³ est tel que défini ci-dessus et des motifs SiO_{4/2}, utilisée en une quantité de 10 à 200 parties en poids et la résine ayant un rapport de la somme des motifs R³₂(OH)SiO_{1/2} et des motifs R³₃SiO_{1/2} sur les motifs SiO_{4/2} dans la fourchette allant de 0,6 à 0,9 ; et
(C) est un ou plusieurs types de composés peroxydes organiques utilisés en une quantité catalytique.

2. Ruban-cache destiné à être utilisé lors de traitement thermique comprenant un film support et une couche d'adhésif sensible à la pression obtensible par durcissement d'une composition d'adhésif sensible à la pression à base de silicone durcissable sous l'action de peroxyde selon la revendication 1, le composant (B) sus-mentionné étant une résine organosiloxane dans laquelle, parmi tous les groupes fonctionnels que contient ce composant, de 90 à 99,5 % en mole sont des groupes méthyle et 0,5 à 10 % en mole sont des groupes silanol.

3. Ruban-cache destiné à être utilisé lors de traitement thermique selon les revendications 1 à 2, la composition d'adhésif sensible à la pression à base de silicone durcissable sous l'action de peroxyde comprenant en outre un solvant organique (D).

4. Ruban-cache destiné à être utilisé lors de traitement thermique selon les revendications 1 à 2, qui est un ruban-cache destiné à être utilisé lors de traitements thermiques à des températures dans la fourchette de 200 à 300 °C.
